# EUROPEAN PATENT APPLICATION

(11) **EP 1 626 537 A1**
(43) Date of publication of application: **15.02.2006**
(21) Application number: 05107241.1
(22) Date of filing: 05.08.2005
(51) Int. Cl.: H04L 12/28

(54) **Wireless LAN network system and a method for connecting access points thereof**

(30) Priority: 11.08.2004 JP 2004234282
(71) Applicant: Iwatsu Electric Co., Ltd., Tokyo 168-8501 (JP)
(72) Inventor: Yamane, Koji, 168-8501, Tokyo (JP)
(74) Representative: Vigand, Philippe

(57) **Abstract**

Each access point determines the LAN cable insertion status and acts as the master access point if a cable is inserted, or as the slave access point if no cable is connected. Of the two access points receiving a "connection instruction," the master access point or a upper access point connected directly or indirectly to the master access point sends a "connection advice message" from the higher level, the lower access point not connected to the master access point sends a "connection request message" from the lower level, and then a "connection response message" is sent from the higher level, and through this procedure the lower access point is added to a new service area.

## Description

This invention relates to a wireless LAN system used for extending the communication area and increasing the handover speed.

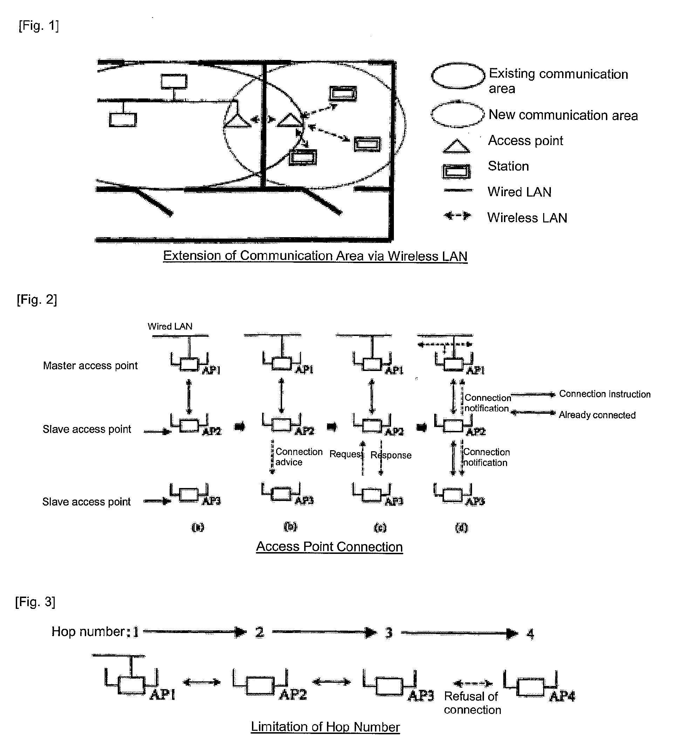

To extend the communication area of a local area network (LAN), a wireless LAN access point is installed in the current communication area as well as in the new area to establish communication with. Then, by setting the MAC address of each access point in the other access point, communication between the two access points via a wireless LAN becomes possible. When a mobile station is installed in the new communication area and registered to the access point in the new area, the mobile station can communicate with the current communication area via the two access points (Fig. 1). This method using a wireless LAN is generally referred to as the access point interconnection system or WDS (Wireless Distribution System) (refer to IEEE Standard 802.11, 1999 Edition).

When a wireless LAN is used, there is no risk of LAN cables increasing to make the network configuration complex. However, the settings required in the introduction stage are cumbersome and give significant burdens to the installation manager.

Additionally, allowing multiple access points to interconnect with one other forms loops in the network, which interferes with the determination of unique communication paths. To prevent loops from forming, a technology called spanning tree must be incorporated into the network equipment. However, this technology sends information packets into the network on a regular basis and thereby consumes the bandwidth of the wireless LAN network.

If multiple access points are installed and mobile stations are provided to move between the access points (handover), information regarding the mobile stations as well as security information must be set in all access points. A method to centrally control the mobile stations is available, but it requires a new server to be installed in the network independent of the access points.

Also, a mobile station performs registration processing (handover processing) at each new access point to which it moves, so movement of the mobile station during communication may temporarily disconnect the communication.

The present invention realizes a wireless LAN area extension method that can extend the service area through a simple procedure by solving these drawbacks associated with the conventional technologies.

To solve the above problems, the present invention utilizes the functions specified below.

### (Means 1) Starting of Access Point Interconnection

Each access point automatically initiates an access point interconnection operation upon detection of a change in the environment such as pressing of the connection instruction button, sending of a connection instruction message, input of power or other external "connection instruction," stopping of the connection destination access point or connection of a cable, to realize simple area extension (Fig. 2 (a)).

### (Means 2) Automation of Access Point Interconnection

In the present invention, each access point determines the LAN cable insertion status and acts as the master access point if a cable is inserted, or as the slave access point if no cable is connected.

Of the two access points receiving a "connection instruction," the master access point or a upper access point connected directly or indirectly to the master access point sends a "connection advice message" (Fig. 2 (b)). Of the two access points receiving a "connection instruction," the lower access point not connected to the master access point receives the connection advice message and then sends a "connection request message" to the access point sending the "connection advice message (Fig. 2 (c)). The upper access point receiving the "connection request message" notifies a "connection response message" to the lower access point (Fig. 2 (c)). Each of the two access points sets the other access point as its connection destination. Furthermore, the upper access point notifies other access point in the network of the addition of a new access point (Fig. 2 (d)). The above procedure is automated to reduce the workload of the person installing access points and thereby realize a function for simple area extension.

### (Means 3) Limitation of Candidate Connection Destination Access Points

Each access point retains, as the connection relationship information of an access point directly or indirectly connected to itself, the MAC address, hop number, station MAC address and other information regarding that access point. The hop number is 1 for the master access point, 2 for the slave access point connected to the master access point, 3 for the slave access point connected to the slave access point with hop number 2, and increases to 4, 5, ..., thereafter in the same manner.

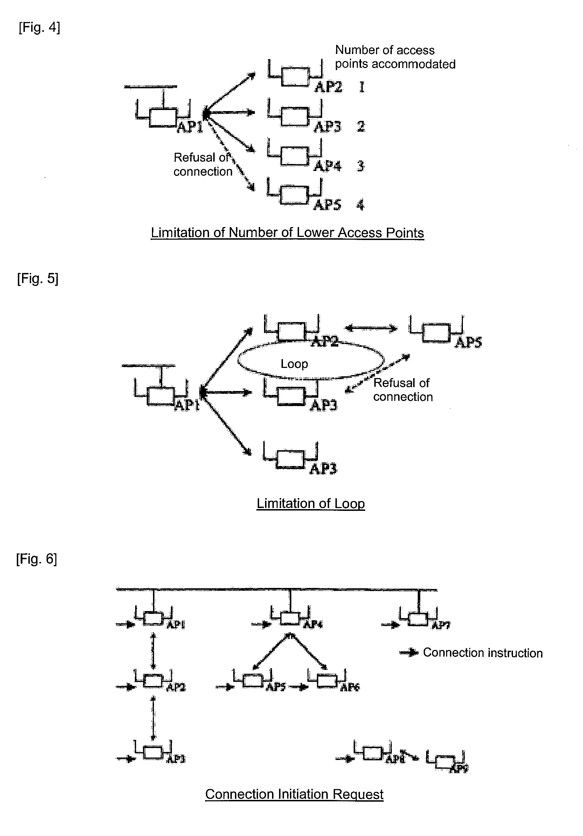

At the upper access point receiving a "connection request message," judgment of whether the connection is to be permitted or refused is made using the connection relationship information. For example, the access point references its connection relationship information and if the hop number from the master access number is equal to or greater than the set value, it refuses connection with the lower access point sending the "connection request message" (Fig. 3). Alternatively, the access point references its connection relationship information and if the number of lower access points already connected to itself exceeds the set value, it refuses connection with the access point sending the "connection request message" (Fig. 4).

As explained above, automatic connection permission/refusal judgment prevents loads from concentrating on a certain access point and at the same time reduces the workload of the person installing access points.

### (Means 4) Prevention of Network Loops

The connection relationship information of each access point is investigated and if a loop will be formed in the network as a result of connecting the access point issuing a "connection request message," the connection is refused or the loop connection is deleted (Fig. 5).

The above automatically realizes connection among access points with one master access point set as the base and multiple slave access points arranged in a tree shape, thereby preventing loops from forming. As a result, the spanning tree function becomes no longer necessary.

### (Means 5) Automatic Selection of Connection Destination Access Point

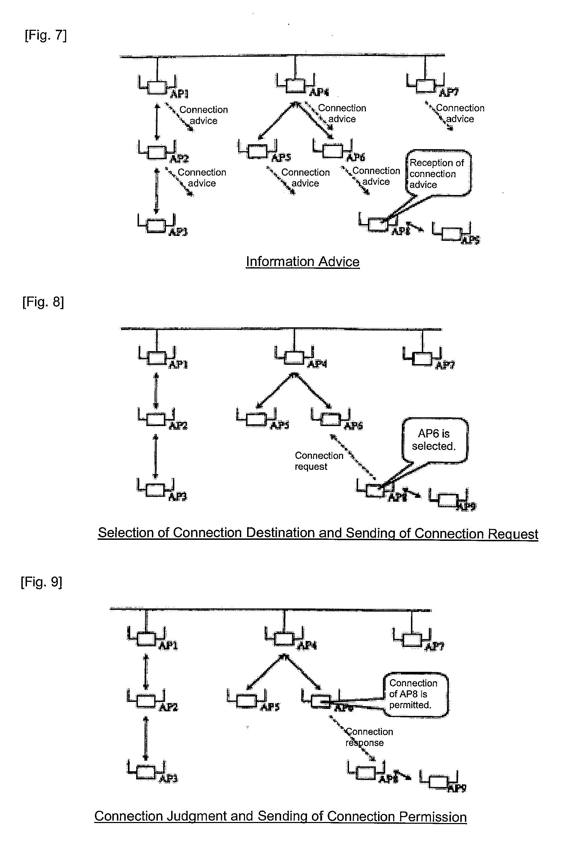

A "connection instruction" is issued to multiple access points (Fig. 6). Of the multiple access points receiving the "connection instruction," the master access point or an upper access point connected directly or indirectly to the master access point sends a "connection advice message." Of the multiple access points receiving the "connection instruction," a lower access point not connected to the master access point receives the "connection advice message (Fig. 7).

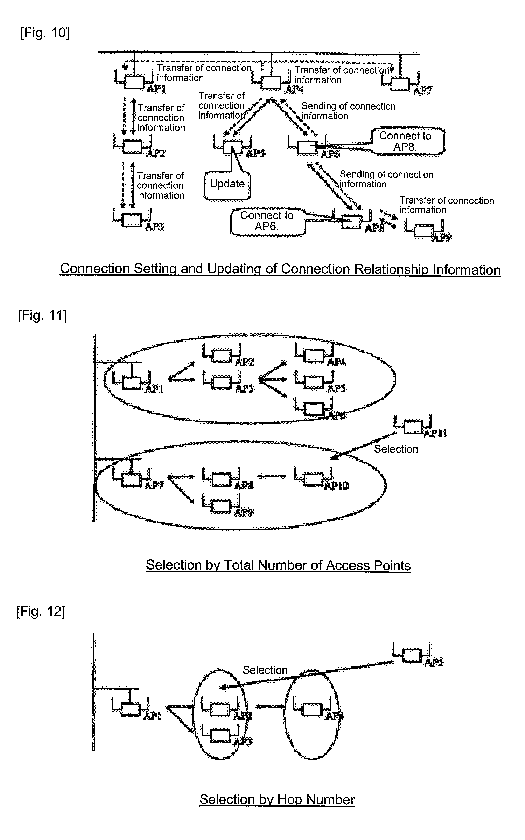

The lower access point receiving the "connection advice messages" sent from multiple access points references the connection relationship information included in each "connection request message," selects the access point to become its connection destination, and then notifies a "connection request message" to the selected access point (Fig. 8). The access point receiving the "connection request message" from the lower access point sends a "connection response message" (Fig. 9). At the same time, each of these two access points sets the other access point as its connection destination. Thereafter, each access point updates the connection relationship information held by itself and sends the new connection relationship information to other access point in the group. The access point in the group receiving the new connection relationship information updates the connection relationship information held by itself (Fig. 10).

If a connection destination access point is to be selected, (Means 3) can be used to limit the candidate connection destination access points. Also, the total number of access points in the connection relationship information can be used to select connection to a tree having a fewer number of access points (Fig. 11). Also, the hop number can be used to select an access point closer to the master access point (Fig. 12). Also, the number of lower access points can be used to connect to an access point having a fewer number of lower access points (Fig. 13).

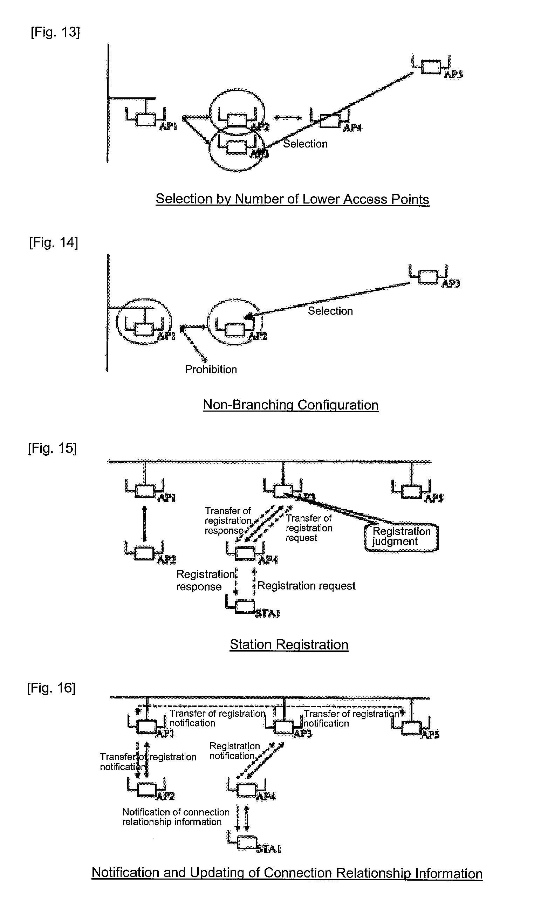

Furthermore, the hop number can be used to select an access point farther away from the master access point. Alternatively, (Means 3) can be used to limit the number of lower access points to 1 and thereby prevent branching of the tree (Fig. 14). These methods allow for automatic identification of and connection to an access point appropriate as the connection destination to realize simple area extension.

### (Means 6) Central Station Control

When a station sends a "registration request message" to a slave access point, the slave access point uses its own function to transfer the "registration request message" to the master access point. The master access point determines if the station can be registered, and then transfers a permission or refusal response to the slave access point via a "registration response message," and the slave access point notifies the "registration response message" to the station (Fig. 15).

If the station sends a "registration request message" to the master access point, normal station registration processing is performed in accordance with the IEEE802.11 standard.

Through the above operations, the stations are centrally controlled by the master access point to simplify the station control.

### (Means 7) Distribution of Station Information

When registration of a station is permitted via the aforementioned central station control or station registration processing in accordance with the IEEE802.11 standard, the access point connecting to the station notifies other access point of the registration of the station. The notified access point then updates the connection relationship information held by itself and also transfers the notification to other access point. The access point connected to the station may notify the connection relationship information held by itself to the station (Fig. 16).

Through the above operations, station information can be shared within the same tree for use in packet transfer or reduction of handover time.

### (Means 8) High-Speed Handover

If an access point exists that offers a better communication environment than the access point currently connected, the station may change the connection destination access point (handover). Determination of the handover destination is implemented by means of comparison of the beacon information sent by each access point (passive probing), comparison of probe response information returned to a probe request (active probing), and so on.

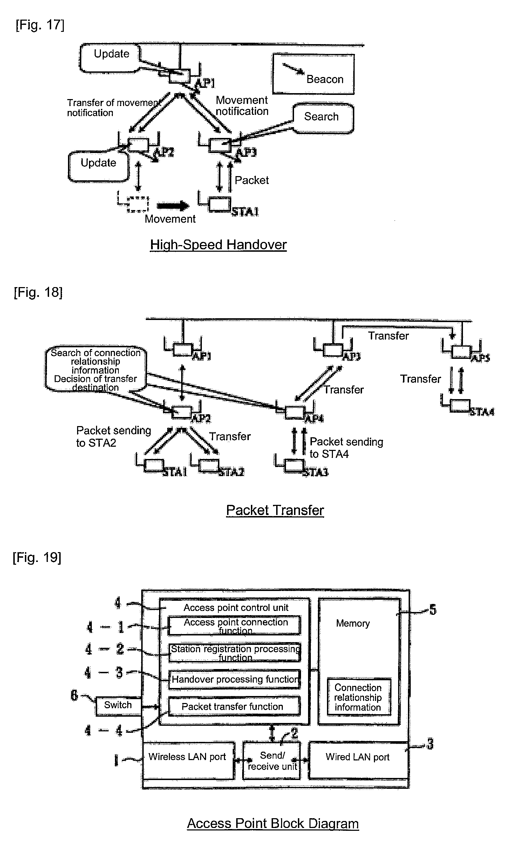

As shown in Fig. 17, the station determines the access point to become the handover destination based on beacon information (or probe response information). The station sends a data packet to the handover destination access point. The access point receiving the data packet references the connection relationship information held by itself and if the station is registered, changes the connection relationship information, sends a "movement notification message" for the station to other access point, and then transfers the data packet sent from the station. The access point receiving the data packet references the connection relationship information held by itself and if the station is not registered, sends a "movement refusal message" to the station.

Upon receiving the "movement notification message," other access point updates the connection relationship information and changes the transfer destination access point for the message addressed to the station.

When handing over to an access point not registered in the connection relationship information held by itself or access point from which a movement refusal has been notified, the station performs handover processing in accordance with the IEEE802.11 standard.

### (Means 9) Data Packet Transfer Processing

As shown in Fig. 18, after receiving a message not addressed to itself the access point transfers the message to other access point or station connected to itself. At this time, the access point references the connection relationship information held by itself and determines the transfer destination of the message or destroys the message.

The present invention allows for extension of the service area of a wireless LAN through a simple procedure, thereby providing a very effective means for building an economical, easy-to-use wireless LAN.
FIG. 1 is a block diagram for explaining the procedure of communication area extension in a wireless LAN;
FIG. 2 is a layout drawing for explaining the procedure of access point connection in the present invention;
FIG. 3 is a layout drawing for explaining the hop number used to limit the access point connection in the present invention;
Fig. 4 is a layout drawing for explaining the lower access number used to limit the access point connection in the present invention;
Fig. 5 is a layout drawing for explaining the loop limitation in access point connection in the present invention;
Fig. 6 is a layout drawing for explaining the initiation request for access point connection in the present invention;
Fig. 7 is a layout drawing for explaining the information advice at access point connection in the present invention;
Fig. 8 is a layout drawing for explaining the selection of connection destination and sending of connection request at access point connection in the present invention;
Fig. 9 is a layout drawing for explaining the connection judgment and sending of connection permission at access point connection in the present invention;
Fig. 10 is a layout drawing for explaining the connection setting and updating of connection relationship information at access point connection in the present invention;
Fig. 11 is a layout drawing for explaining the selection based on total number of access points at access point connection in the present invention;
Fig. 12 is a layout drawing for explaining the selection based on hop number at access point connection in the present invention;
Fig. 13 is a layout drawing for explaining the selection based on number of lower access points at access point connection in the present invention;
Fig. 14 is a layout drawing for explaining a non-branching configuration when implementing access point connection in the present invention;
Fig. 15 is a layout drawing for explaining the station registration at access point connection in the present invention;
Fig. 16 is a layout drawing for explaining the notification and updating of connection relationship information at access point connection in the present invention;
Fig. 17 is a layout drawing for explaining the high-speed handover at access point connection in the present invention;
Fig. 18 is a layout drawing for explaining the packet transfer in a wireless LAN based on the present invention;
Fig. 19 is a block diagram showing an example of access point configuration used in the present invention;

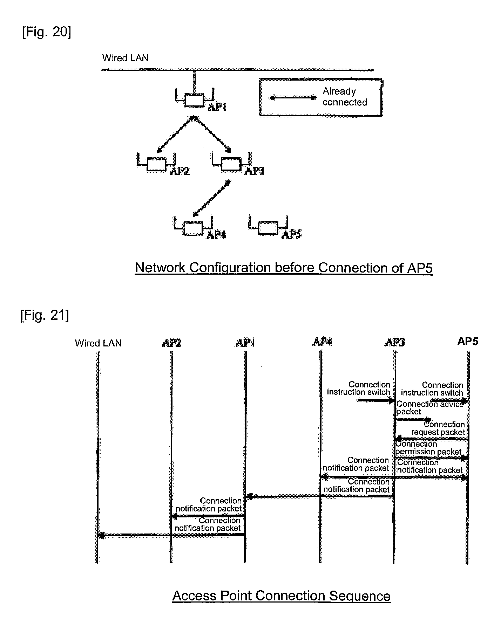

Fig. 20 is a layout drawing showing a network configuration before connection of an access point (AP5) in the present invention;
Fig. 21 is a drawing showing an example of access point connection sequence in the present invention;

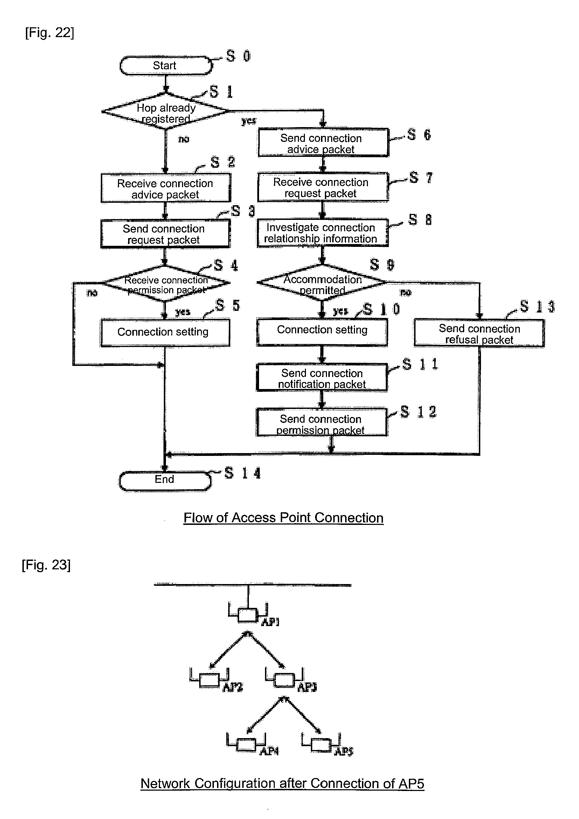

Fig. 22 is a flowchart showing the access point connection operation in the present invention;
Fig. 23 is a layout drawing showing a network configuration after connection of an access point (AP5) in the present invention;

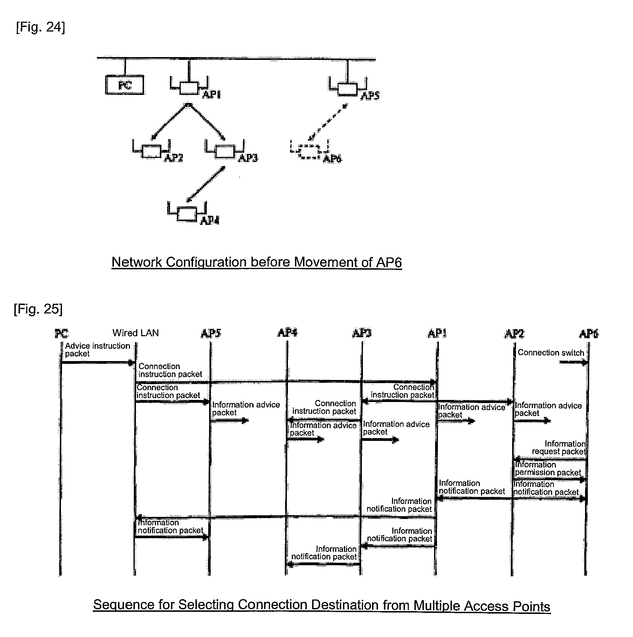

Fig. 24 is a layout drawing showing a network configuration before movement of an access point (AP6) in the present invention;
Fig. 25 is a drawing showing an example of sequence for selecting the connection destination from multiple access points in the present invention;

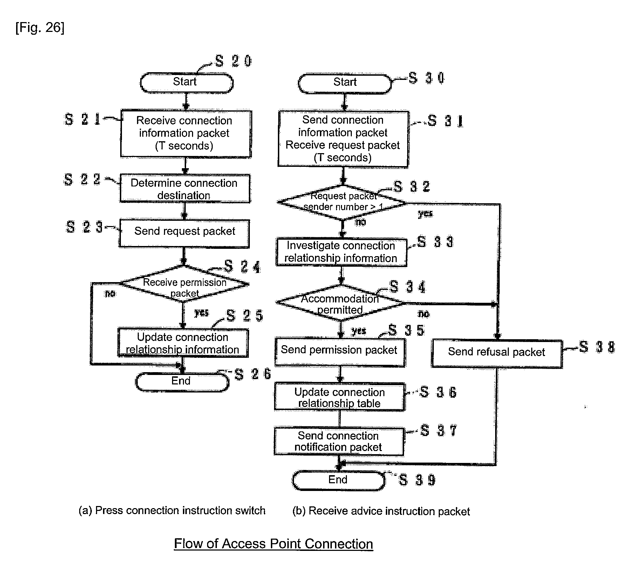

Fig. 26 is a flowchart showing the connection operation upon reception of an advice instruction packet (b) and pressing of the connection instruction switch (a) at an access point in the present invention;

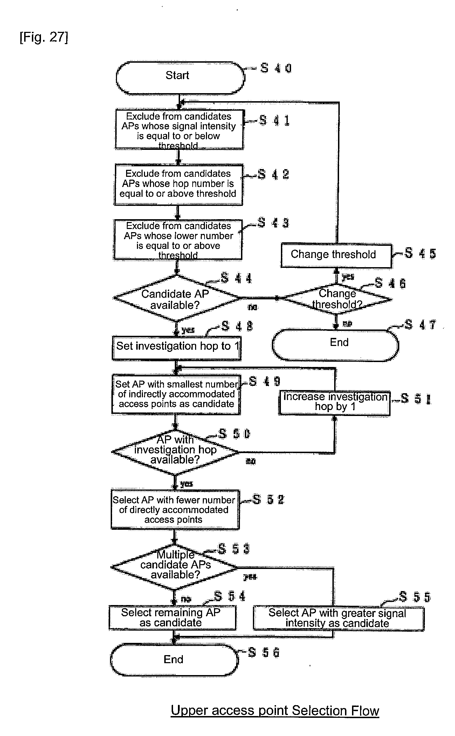

Fig. 27 is a flowchart showing the operation of upper access point selection in the present invention;

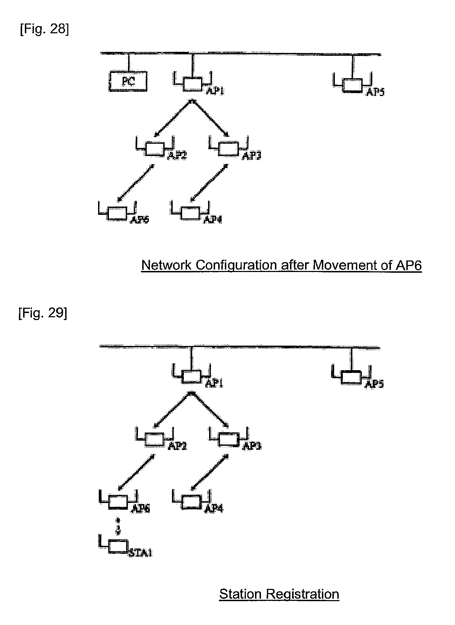

Fig. 28 is a layout drawing showing a network configuration after movement of an access point (AP6) in the present invention;

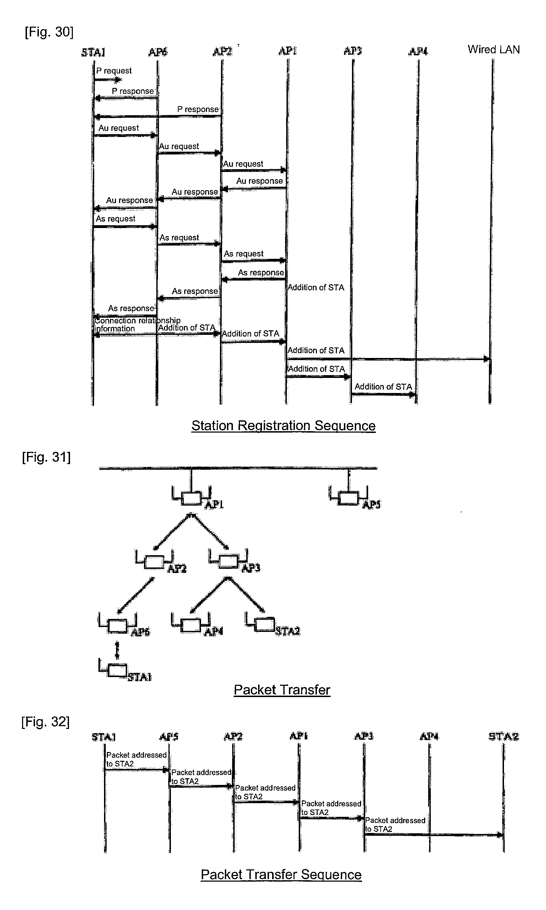

Fig. 29 is a layout drawing for explaining the station registration in the present invention;
Fig. 30 is a drawing showing an example of station registration sequence in the present invention;
Fig. 31 is a layout drawing for explaining the packet transfer in a wireless LAN based on the present invention;
Fig. 32 is a drawing showing an operation sequence of the packet transfer illustrated in Fig. 31;

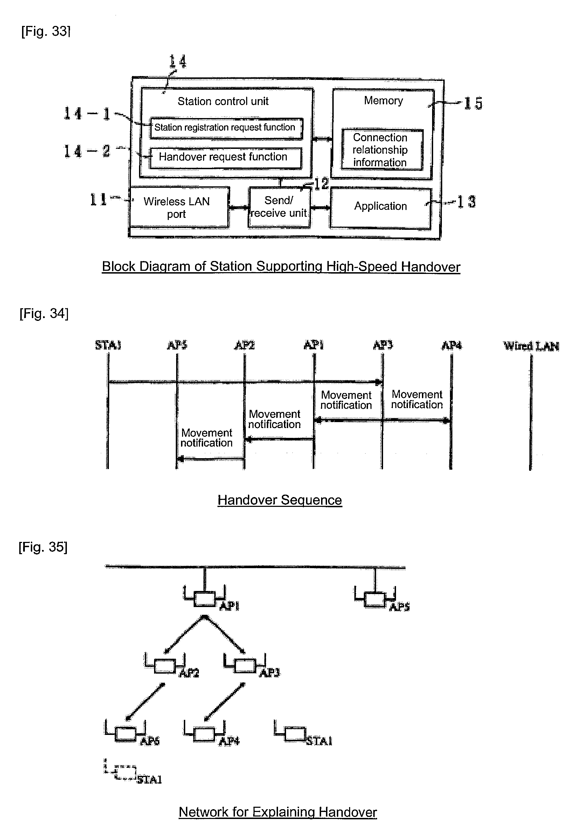

Fig. 33 is a block diagram showing an example of station supporting high-speed handover in the present invention;
Fig. 34 is a drawing showing an example of handover sequence in the present invention; and
Fig. 35 is a layout drawing showing an example of network for explaining the handover in the present invention.

Fig. 19 shows a block diagram of an access point in which the aforementioned functions are installed. The access point comprises the access point control unit (4), memory (5), send/receive unit (2), wireless LAN port (1), wired LAN port (3) and switch (6). The wireless LAN port (1) receives the packets sent to the wireless LAN network and sends the packets from the send/receive unit to the wireless LAN network. The wired LAN port (3) receives the packets sent to the wired network and sends the packets from the send/receive unit to the wired network. The send/receive unit (2) transfers to the wireless LAN port (1)/wired LAN port (3) or access point control unit (4), in accordance with the instruction by the access point control unit (4), the packets transferred from the access point control unit (4) or wireless LAN port (1)/wired LAN port (3). The access point control unit (4) references the "connection relationship information" in the memory (5) and performs connection control of other access points, controls station registration and handover (station movement) and instructs packet transfer. It also updates the "connection relationship information."

### (Access Point Interconnection Function)

### (Example of One-to-One Access Point Connection)

As shown in Fig. 20, an example where new access point AP5 is connected to access point AP3 in a network that already has access points AP1, AP2, AP3 and AP4 is used to explain the access point interconnection operation.

Each access point has the configuration shown in Fig. 19. The memory (5) of each access point stores the "connection relationship information" specified in each line of Table 1. The MAC column of Table 1 stores the MAC address of each access point. The hop column stores the hop number from the master access point. The higher MAC column stores the MAC address of the upper access point connected to the applicable access point. The lower number column stores the number of lower access points connected to the applicable access point. The lower MAC column stores the MAC address of each lower access point connected to the applicable access point.

**[Table 1] Connection Relationship Information in Each Access Point before Connection of AP5**

| | MAC | Hop | Higher MAC | Lower number | Lower MAC | |
|---|---|---|---|---|---|---|
| Connection relationship information in AP1's memory | ADR1 | 1 | - | 2 | ADR2 | ADR |
| Connection relationship information in AP2's memory | ADR2 | 2 | ADR1 | 0 | - | - |
| Connection relationship information in AP3's memory | ADR3 | 2 | ADR1 | 1 | ADR4 | |
| Connection relationship information in AP4's memory | ADR4 | 3 | ADR3 | 0 | - | - |
| Connection relationship information in AP5's memory | ADR5 | - | - | 0 | - | - |

Fig. 21 shows a messaging sequence between access points, while Fig. 22 shows the operation of the access point connection function (4-1). If AP5 is to be connected as the lower access point of AP3, the connection instruction switch (6) is pressed on both AP3 and AP5. When the switch (6) is pressed, the access point connection function (4-1) in the access point control unit (4) is activated.

The access point connection function (4-1) in AP3 references the connection relationship information in the memory (5) and detects that it is already connected to a upper access point, and then instructs the send/receive unit (2) to send a "connection advice packet" including its own MAC address (ADR3) at a constant frequency during a predetermined time (T seconds). According to the instruction, the send/receive unit (2) sends a "connection advice packet" via the wireless LAN port and waits for a "connection request packet" from AP5.

The access point connection function (4-1) in AP5 references the connection relationship information in the memory (5) and detects that it is not already connected to an upper access point, and then instructs the send/receive unit (2) to receive a "connection advice packet" during a predetermined time (T seconds). After being notified of the reception of a "connection advice packet" from the send/receive unit (2), the access point connection function (4-1) in AP5 instructs the send/receive unit (2) to send a "connection request packet" to the MAC address included in the packet.

After receiving the "connection request packet" from AP5, the access point connection function (4-1) in AP3 checks its hop number and lower number in the "connection relationship information" in the memory (5) and if the values are equal to or below the respective thresholds, instructs the send/receive unit (2) to send a "connection permission packet." If the values exceed the respective thresholds, the access point connection function (4-1) in AP3 instructs sending a "connection refusal packet." If the access point connection function (4-1) in AP3 instructs sending a "connection permission packet," it then connects AP5 as the lower access point.

After being notified of the reception of a "connection permission packet" from the send/receive unit (2), the access point connection function (4-1) in AP5 connects AP4 as the upper access point.

Finally, the access point connection function (4-1) in AP3 updates the "connection relationship information" in the memory (5) and instructs the send/receive unit (2) to send a "connection notification packet" to the MAC addresses of higher and lower access points stored in the "connection relationship information" in order to notify the connection of AP5.

The access point control unit (4) of the access point receiving the "connection notification packet" updates the "connection relationship information" in the memory (5) and instructs the send/receive unit (2) to send the "connection notification packet" to the MAC addresses of higher and lower access points stored in the "connection relationship information" (excluding the address from which the "connection notification packet" was received).

Fig. 22 shows a flow of connection operation that takes place at the access point. Each operation step is explained below.
S0: The access point initiates connection operation when the switch is pressed.
S1: The access point references the "connection relationship information" to check if its hop number is registered.
S2: If the hop number is not yet registered, the access point performs a "connection advice packet" receive operation to connect as the lower access point.
S3: When a "connection advice packet" is received, the access point sends a "connection request packet."
S4: The access point waits for reception of a "connection permission packet." If a "connection refusal packet" is received or "connection permission packet" cannot be received within a specified time, the access point ends the processing (S14).
S5: When a "connection permission packet" is received, the access point performs "connection setting."
S6: If the hop number is registered in S1, the access point performs a "connection advice packet" send operation to connect as the upper access point.
S7: The access point waits for reception of a "connection request packet."
S8: When a "connection request packet" is received, the access point investigates the "connection relationship information."
S9: The access point determines if accommodation is permitted based on the investigation result of the "connection relationship information."
S10: If accommodation is permitted, the access point performs "connection setting."
S11: The access point sends a "connection permission packet" to the sender of the "connection request packet." S12: The access point sends a "connection notification packet" to the connection destination access point to notify the connection of a new access point, and then ends the processing (S14).
S13: If accommodation is refused, the access point sends a "connection refusal packet" to the sender of the "connection request packet," and then ends the processing.
S14: End

Fig. 23 shows the network configuration after connection of AP5. Table 2 lists the "connection relationship information" in the memory (5) of each access point after connection of AP5.

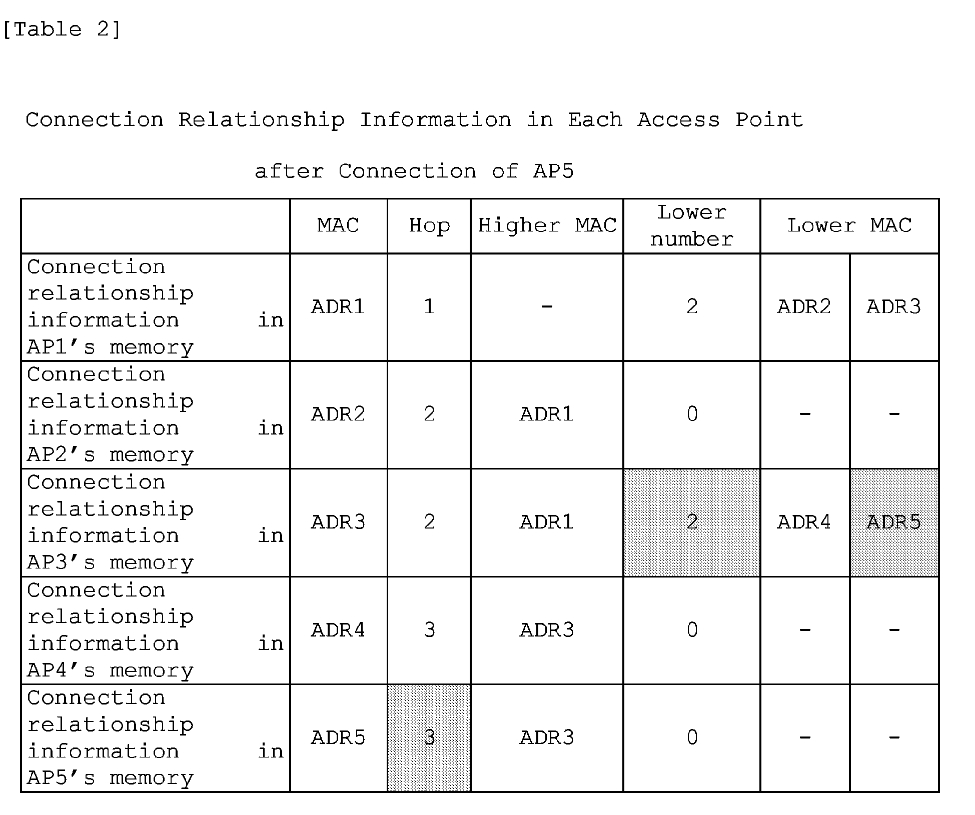

### (Example of Many-to-One Access Point Connection)

As shown in Fig. 24, AP6 is connected to AP5 as the lower access point in a network that has access points AP1 to AP6. Here, an example where AP6 is moved and connected as the lower access point of one of AP1 to AP5, whichever offers a better communication environment, is used to explain the access point interconnection operation.

Each access point has the configuration shown in Fig. 19. The memory (5) of each access point in the group where AP1 is the master access point stores the same "connection relationship information" specified in Table 3. The memory (5) of each access point in the group where AP5 is the master access point stores the same "connection relationship information" specified in Table 4. Here, the MAC address column stores the MAC addresses of all access points in the applicable group. The higher MAC column stores the MAC address of the upper access point connected to the access point having each address in the MAC address column. The hop column stores the hop number of the access point having each address in the MAC address column.

**[Table 3] Connection Relationship Information of Group Having AP1 as Master Access Point before Movement of AP6**

| MAC address | Higher MAC | Hop |
|---|---|---|
| ADR1 | - | 1 |
| ADR2 | ADR1 | 2 |
| ADR3 | ADR1 | 2 |
| ADR4 | ADR3 | 3 |

**[Table 4] Connection Relationship Information of Group Having AP5 as Master Access Point before Movement of AP6**

| MAC address | Higher MAC | Hop |
|---|---|---|
| ADR5 | - | 1 |
| ADR6 | ADR5 | 2 |

Fig. 25 shows a messaging sequence between access points, while Fig. 26 illustrates the operation at the access point. An "advice instruction packet" is sent from the PC via the wired network to accommodate AP6. After being informed of the reception of an advice instruction packet from the send/receive unit (2), the access point connection functions of maser access point AP1 and AP5 instruct the send/receive unit (2) to transfer the "advice instruction packet" to the lower access point. After being informed of the reception of an "advice instruction packet" from the send/receive unit (2), the access point connection function (4-1) in the slave access point instructs the send/receive unit (2) to transfer the "advice instruction packet" to the lower access point. The connection switch (6) is pressed on AP6 to select the connection destination.

After being informed of the reception of an "advice instruction packet" from the send/receive unit (2), the access point connection functions (4-1) in AP1 to AP5 issue an instruction to the send/receive unit (2) to send a "connection advice packet" repeatedly for a specified time (T seconds). The send/receive unit (2) sends a "connection advice packet" to the wireless LAN port.

The "connection advice packet" stores the information shown in Table 5, which was created from the connection relationship information. "MAC" indicates the MAC address of the access point sending the "advice packet." "Hop" indicates the hop number of the access point sending the "advice packet." "Lower number" indicates the number of lower access points connected to the access point sending the "advice packet." "H1" indicates the total number of access points under the access point having hop number 1. "H2" indicates the total number of access points under the access point having hop number 2, being located between the master access point and the applicable access point. Similarly, "H3" indicates the total number of access points under the access point having hop number 3, being located between the master access point and the applicable access point. As an example, line 2 in Table 5 shows the content of the "connection advice packet" sent from access point AP2. It indicates that the MAC address of AP2 is ADR2 and the hop number of AP2 is 2. The lower number column shows that the number of lower access points for AP2 is 0. The H1 column indicates that the total number of access points under master access point AP1 is 3, while the H2 column indicates that the total number of access points under slave access point AP2 is 0. Since AP2 has hop number 2, it does not have any H3 information.

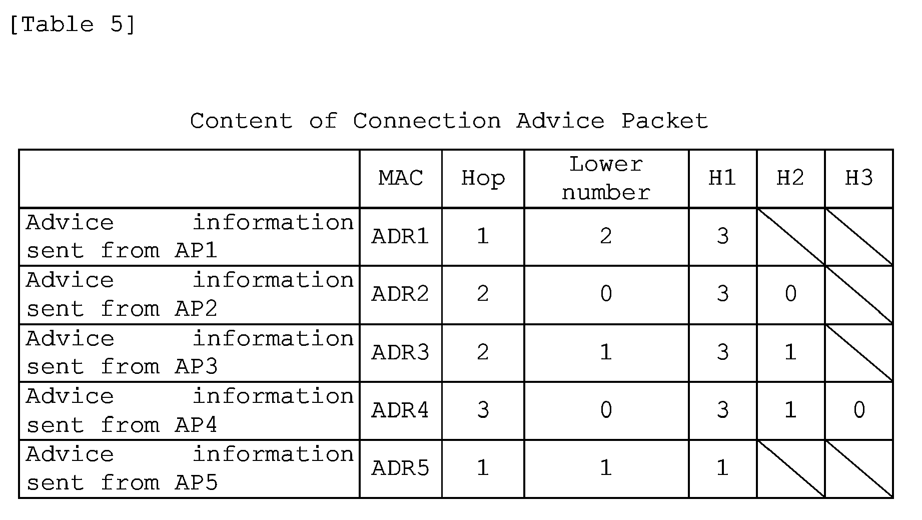

Fig. 26 shows a flow of connection operation that takes place at the access point. Each operation step is explained below.
(a) Press the connection instruction switch
   S20: When the switch is pressed, the access point initiates connection operation.
   S21: The access point performs a "connection advice packet" receive operation.
   S22: The access point selects the connection destination access point according to the flowchart in Fig. 27 provided later.
   S23: The access point sends a "connection request packet" to the selected access point.
   S24: The access point waits for reception of a "connection permission packet." If a "connection refusal packet" is received or "connection permission packet" cannot be received within a specified time, the access point ends the processing.
   S25: When a "connection permission packet" is received, the access point updates the "connection relationship information" (connection setting).
   S26: End
(b) Receive an advice instruction packet
   S30: The access point receiving an "advice instruction packet" initiates connection operation.
   S31: The access point sends a "connection advice packet" for a specified time, while performing a "connection request packet" receive operation at the same time.
   S32: The access point checks if a "connection request packet" was received from multiple access points.
   S33: If a "connection request packet" was received only from one access point, the access point investigates the "connection relationship information."
   S34: The access point determines if accommodation is permitted based on the investigation result of the "connection relationship information."
   S35: If accommodation is permitted, the access point sends a "connection permission packet."
   S36: The access point sends a "connection notification packet" to the connection destination access point to notify the connection of a new access point.
   S37: The access point updates the "connection relationship information" (connection setting) to end the processing. S38: If it determines that a "connection request packet" was received from multiple access points based on the check result in S32, or that accommodation is not permitted as a result of S34, the access point sends a "connection refusal packet."
   S39: End

Fig. 27 shows an upper access point selection flow. Each operation step is explained below.
S41: The access point excludes from the candidates those access points from which a "connection advice packet" was received in S21 whose signal intensity is equal to or below the threshold.
S42: The access point excludes from the candidates those access points from which a "connection advice packet" was received in S21 whose hop number is equal to or above the threshold.
S43: The access point excludes from the candidates those access points from which a "connection advice packet" was received in S21 whose number of lower access points is equal to or above the threshold.
S44: The access point checks if a candidate access point exists as a result of S41 to S43.
S46: If no candidate exists, the access point determines whether or not to change any of the thresholds.
S47: If the thresholds are not changed, the access point ends the processing.
S45: If any of the thresholds was changed, the access point returns to S41 and selects again.
S48: If a candidate access point exists in S44, the access point sets the investigation hop to 1.
S49: The "connection advice packet" from each access point records the hop number of the access point sending the "connection advice packet," the number of lower access points directly connected to the access point sending the "connection advice packet" (lower number), and the total number of lower access points directly or indirectly connected to the access points having hop numbers 1 to 3 being located between the applicable access point and master access point (H1: hop 1, H2: hop 2, H3: hop 3), as shown in each line of Table 5. Of the candidate access points, the "connection advice packet" sender access point having the least number of total lower access points (number of access points indirectly accommodated), as revealed by the investigation hop, is selected as the candidate (there may be more than one candidate), and other access points are excluded.
S50: The access point compares the investigation hop and the hop column in Table 5 and checks if any access point equivalent to the investigation hop exists (there may be more than one such access point).
S51: If no access point exists that has the investigation hop, the "connection advice packet" sender access point selected as the candidate in S49 is an access point connected at a lower position than the investigation hop. Therefore, the access point increases the investigation hop number by 1 and repeats S49.
S52: If an access point having the investigation hop exists as a result of S50, this access point is located closer to the master access point (hop 1) connected to the wired LAN network and has a fewer number of total lower access points connected directly or indirectly. Therefore, such access point is subject to less traffic and therefore suitable as the connection destination access point.
   The access point selects as the candidate the access point having the smallest number of access points directly accommodated (lower number in Table 5) from all such access points (there may be more than one candidate).
S53: The access point investigates if there are multiple candidate access points.
S54: If there is only one access point, the access point selects it as the connection destination and proceeds to
S56.
S55: If there are multiple candidate access points, the access point selects the one with the greatest signal intensity, and then proceeds to S56.

After elapse of T seconds, the access point connection function (4-1) of AP6 determines the connection destination using the information in the "information advice packet" received by the send/receive unit (2), and instructs the send/receive unit (2) to send a "connection request packet." In the example, it is assumed that "information advice packets" are received from nearby access points AP2, AP3 and AP4, and that AP2 is selected according to the flowchart in Fig. 27, as shown in Fig. 28.

The access point connection function (4-1) of AP2 is notified of the reception of a "connection request packet" from the send/receive unit (2), and checks its hop number and number of connected lower access points in the memory. If they are equal to or below the specified values, the access point connection function (4-1) of AP2 instructs the send/receive unit (2) to send a "connection permission packet."

When notified of the reception of a "connection permission packet" from the send/receive unit (2), the access point control unit (4) of AP6 sets the MAC address of AP2 as the MAC address of upper access point. The access point control unit (4) of AP2 updates the "connection relationship information," and then notifies the new "connection relationship information" to the MAC addresses of higher and lower access points. The new "connection relationship information" is shown in Tables 6 and 7.

**[Table 6] Connection Relationship Information of AP1 Group after Movement of AP6**

| MAC address | Higher MAC | Hop |
|---|---|---|
| ADR1 | - | 1 |
| ADR2 | ADR1 | 2 |
| ADR3 | ADR1 | 2 |
| ADR4 | ADR3 | 3 |
| ADR6 | ADR2 | 3 |

**[Table 7] Connection Relationship Information of AP5 Group after Movement of AP6**

| MAC address | Higher MAC | Hop |
|---|---|---|
| ADR5 | - | 1 |

### (Station Connection Function)

A station must be registered to the access point first in order to establish communication. An example where station STA1 is registered via access point AP6, as shown in Fig. 29, is explained.

Fig. 30 shows a messaging sequence between access points at the time of station registration. First, station STA1 broadcasts a probe request (P request). When informed of the reception of a probe request from the send/receive unit (2), the station registration processing function of the access point instructs the send/receive unit (2) to send a probe response (P response). In Fig. 30, AP2 and AP6 receive a probe request and send a probe response.

After receiving the probe response, station STA1 selects, from among the access points that sent a probe response (AP2, AP6), AP6 as an appropriate access point to communicate with, and then sends an authentication request (Au request).

When informed of the reception of an authentication request from the send/receive unit (2), the station registration processing function (4-2) of access point AP6 searches the connection relationship information and instructs the send/receive unit (2) to transfer the authentication request to upper access point AP2.

Similarly, when informed of the reception of an authentication request from the send/receive unit (2), the station registration processing function (4-2) of access point AP2 searches the connection relationship information and instructs the send/receive unit (2) to transfer the authentication request to upper access point AP1.

When informed of the reception of an authentication request from the send/receive unit (2), the station registration processing function (4-2) of access point AP1 instructs the send/receive unit (2) to transfer the authentication response (Au response) to lower access point AP2.

When informed of the reception of an authentication response from the send/receive unit (2), the station registration processing function (4-2) of access point AP2 instructs the send/receive unit (2) to transfer the authentication response to lower access point AP6.

When informed of the reception of an authentication response from the send/receive unit (2), the station registration processing function (4-2) of access point AP6 instructs the send/receive unit (2) to transfer the authentication response to station STA1.

After receiving the authentication response, station STA1 sends an association request (As request) to access point AP6. This request is also transferred to access point AP1, and an association response (As response) is returned from access point AP1.

The station registration processing function (4-2) of access point AP6 registers station STA1 in the connection relationship information in the memory. At the same time, access point AP6 sends a registration of station STA1 to access point AP2, and access point AP2 sends it to access point AP1. Each access point thus registers the station information. AP6 also sends the connection relationship information (Table 6) to station STA2.

Table 8 shows an example of station information registration in the connection relationship information of access point AP6. The access point MAC column indicates the MAC address of the applicable access point as well as the MAC addresses of higher/lower access points. Here, the MAC address of access point AP6 (ADR6) and that of AP2 (ADR2) being the upper access point of AP6 are stored. The station MAC address column stores the MAC address of each station registered in the group. Here, the address of station STA1 (ADRS1) is stored in the MAC address line of ADR6 corresponding to access point AP6.

**[Table 8] Station Information in AP6**

| Access point MAC | Station MAC | | |
|---|---|---|---|
| ADR2 | | | |
| ADR6 | ADRS1 | | |

Table 9 shows the connection relationship information (station information) of access point AP1. The access point MAC column shows the MAC address of access point AP1 (ADR1) and those of AP2 (ADR2) and AP3 (ADR3) being the lower access points of AP1. The station MAC address column stores the address of station STA1 in the MAC address line of ADR2 corresponding to access point AP2, indicating that packets addressed to STA1 will be transferred to AP2. Similarly, Table 10 shows the connection relationship information (station information) of access point AP3.

**[Table 9] Station Information in AP1**

| Access point MAC | Station MAC | | |
|---|---|---|---|
| ADR1 | | | |
| ADR2 | STA1 | | |
| ADR3 | | | |

**[Table 10] Station Information in AP3**

| Access point MAC | Station MAC | | |
|---|---|---|---|
| ADR1 | STA1 | | |
| ADR3 | | | |
| ADR4 | | | |

### (STA Handover Processing)

The access point references the connection relationship information and performs high-speed handover processing. Fig. 33 shows a block diagram of a station supporting high-speed handover processing. The station comprises the station control unit (14), memory (15), send/receive unit (12), wireless LAN port (11) and application (13).

The wireless LAN port (11) receives packets sent to the wireless LAN network and sends the packets from the send/receive unit to the wireless LAN network. The application (13) provides the voice communication function and other functions that use a wireless LAN to send/receive data. The send/receive unit (12) transfers to the wireless LAN port (11)/application (13) or station control unit (14), according to the instruction by the station control unit (14), the packets transferred from the station control unit (14) or wireless LAN port (11)/application (13). The station control unit (14) references the "connection relationship information" in the memory (15) and controls handover (station movement) .

As shown in Fig. 35, a case where station STA connected to AP6 performs handover is explained. When notified from the send/receive unit (12) of the reception of a beacon sent from an access point (AP1 to AP6) operating in the same channel, the handover request function (14-2) of station STA1 retrieves the MAC address (ADR1 to ADR6) and communication environment information (signal intensity and SN ratio) of the beacon sender and retains the information in the memory (15).

Fig. 34 shows a handover sequence. The handover request function (14-2) of station STA1 tabulates the communication environment information during a specified period and upon finding access point AP3 a more appropriate communication target than the currently communicating access point AP6, it compares the MAC address of AP3 (ADR3) against the MAC address in the connection relationship information (Table 6) stored in the memory. If a match is found, the handover request function (14-2) of station STA1 instructs the send/receive unit (12) to send packets to AP3 thereafter.

When notified of the reception of a packet from the send/receive unit, the handover processing function (4-3) of access point AP3 searches the connection relationship information and upon finding an address matching the MAC address of the packet sender, it instructs the send/receive unit to send a movement notification packet to notify other access points in the group that the station has moved. At the same time, the handover processing function (4-3) of access point AP3 instructs the send/receive unit to transfer the packet.

After receiving a movement notification packet, the handover processing function (4-3) of the applicable access point updates the connection relationship information (station information). Tables 14, 15, 16 and 17 show the updated connection relationship information (station information).

**[Table 14] Connection Relationship Information in AP1 before Movement of STA1**

| Access point MAC address | Station MAC | Station MAC | Station MAC |
|---|---|---|---|
| ADR1 | | | |
| ADR2 | STA1 | | |
| ADR3 | | | |

**[Table 15] Connection Relationship Information in AP6 before Movement of STA1**

| Access point MAC address | Station MAC | Station MAC | Station MAC |
|---|---|---|---|
| ADR2 | | | |
| ADR6 | STA1 | | |

**[Table 16] Connection Relationship Information in AP1 after Movement of STA1**

| Access point MAC address | Station MAC | Station MAC | Station MAC |
|---|---|---|---|
| ADR1 | | | |
| ADR2 | (Deleted) | | |
| ADR3 | STA1 (Added) | | |

**[Table 17] Connection Relationship Information in AP6 after Movement of STA1**

| Access point MAC address | Station MAC | Station MAC | Station MAC |
|---|---|---|---|
| ADR2 | STA1 (Added) | | |
| ADR6 | (Deleted) | | |

### (Packet Transfer Function)

The access point transfers packets sent from other access point or station. A case where packets are sent from STA1 under AP6 to STA2 under AP3 in the network shown in Fig. 31 is explained.

Fig. 32 shows a packet transfer sequence between access points. When sending a packet to STA2, STA1 under AP6 sends the packet to access point AP6 to which it is connected.

The packet transfer function in access point AP6 compares the address of the packet sending destination (STA2) against the connection relationship information (station information) in the memory as shown in Table 11, and determines the access point to transfer the packet to (AP2), and then instructs the send/receive unit (2) to transfer the packet to AP2. The send/receive unit (2) sends the packet to access point AP2 via the wireless LAN port.

**[Table 11] Station Information in AP6**

| Access point MAC address | Station MAC | Station MAC | Station MAC |
|---|---|---|---|
| ADR2 | STA2 | | |
| ADR6 | STA1 | | |

Similarly, the packet transfer function in access point AP2 compares the address of the packet sending destination (STA2) against the connection relationship information (station information) in the memory as shown in Table 12, and determines the access point to transfer the packet to (AP1), and then instructs the send/receive unit (2) to transfer the packet to AP1. The send/receive unit (2) sends the packet to access point AP1 via the wireless LAN port. Similarly, access point AP1 sends the packet to access point AP3.

**[Table 12] Station Information in AP2**

| Access point MAC address | Station MAC | Station MAC | Station MAC |
|---|---|---|---|
| ADR1 | STA2 | | |
| ADR2 | | | |
| ADR6 | STA1 | | |

The packet transfer function in access point AP3 compares the address of the packet sending destination (STA2) against the station information in the memory as shown in Table 13, and confirms that station STA2 is under access point AP3, and then instructs the send/receive unit (2) to transfer the packet to STA2. The send/receive unit (2) sends the packet to STA2 via the wireless LAN port.

**[Table 13]Station Information in AP3**

| Access point MAC address | Station MAC | Station MAC | Station MAC |
|---|---|---|---|
| ADR1 | | | |
| ADR2 | STA1 | | |
| ADR3 | STA2 | | |

The present invention can be applied for the purpose of extending the communication area of a wireless LAN and increasing the handover speed.

## Claims

1. A method for establishing a connection between an existing access point and a new access point to be installed of a wireless LAN system comprising a master access point being connected with a wired LAN cable and slave access points being directly wirelessly connected with said master access point or indirectly wirelessly connected with said master access point via others, comprising steps of,
(A) an existing and a new access points receiving an interconnection instruction;
(B) said existing access point sending a connection advice message to said new access point;
(C) said new access point sending a connection request message to said existing access point;
(D) a first existing access point having received said connection request message from said new access point sending a connection response message to said new access point;
(E) said first existing and said new access points setting the other access point as its connection destination;
(F) said first existing access point notifying other existing access point in the LAN system of registration of said new access point.

2. The method of claim 1 **characterized in that** the step (D) is implemented when a predetermined value is less than a threshold value.

3. The method of claim 2 **characterized in that** said predetermined value is a hop number counted from said master access point to said first access point.

4. The method of claim 2 **characterized in that** said predetermined value is a number of access points being downwardly connected with said access point.

5. The method of claim 1 **characterized in that** in step (D), said new access point is connected with only one of said existing access points, to make a connection that said master access point is a base and a plurality of slave access points are arranged in a tree shape from the base.

6. The method of claim 1 **characterized in that** steps (C) and (D) are replaced by the steps of
(C1) said new access point selecting first existing access point among a plurality of the existing access points, based upon said connection advice message;
(C2) said new access point sending a connection request message to first access point being selected;
(D) said first existing access point having received the connection request message from said new access point sending a connection response message to said new access point.

7. The method of claim 6 **characterized in that** said connection advise message of step (B) includes a hop number counted from said master access point to said first access point.

8. The method of claim 6 **characterized in that** said connection advise message of step (B) includes a number of access points being downwardly connected with said access point.

9. The method of claim 6 further comprising the steps of;
(G) a station included in the wireless LAN system sending a registration request message to a slave access point and/or a master access point;
(H) said slave access point transferring said registration request message to a master access point;
(I) said master access point registering said station in accordance with IEEE802.11 standard, based upon said registration request message, to manage a plurality of access points.

10. The method of claim 9 further comprising the steps of;
(J1) said slave access point having connected with said station informing other access points of registration message of said station;
(J2) said slave access point having connected with said station informing said station of its own connection relationship information;
(K) other access points updating its own connection relationship information.

11. The method of claim 9 further comprising the steps of;
(L) said station being connected with first access point sending a data packets to a handover destination, that is, a second access point, based upon a beacon information and/or a probe response information;
(M) said second access point instructing said first access point to transfer said data packet from said station to said second access point by sending a movement notification message to said first access point, when said station is registered;
(N) said second access point sending a movement refusal message to said station, when said station is not registered;
(O) said station implementing a handover in accordance with IEEE802.11 standard when said station is not registered.

12. The method of claim 6 further comprising the steps of;
(P) said access point receiving a message being not addressed to said access point;
(Q) said access point discarding the message or transferring the message to an access point that registered in its own connection relationship information.

13. The method of claim 1 or 6 further **characterized in that**
the step (A) is automatically implemented upon detection of a change in the environment such as pressing of the connection instruction button, sending of connection instruction message, input of power or other external connection instruction, stopping of the connection destination access point or connection of a cable.

14. A wireless LAN system comprising a master access point being connected with a wired LAN cable, first slave access points being directly wirelessly connected with said master access point or indirectly wirelessly connected with said master access point via others and a second access point to be connected with one of said first slave access point,
**characterized by** that;
said first slave access point comprising;
a trigger switch (6) for initiating reception of an interconnection instruction;
at least wireless ports (1,2) for receiving said interconnection instruction and sending a connection advice message;
a memory (5) for storing a connection relationship information between said first slave and other access points;
an access point control unit (4) for controlling said first access point, based upon said information stored in said memory;
such that said first slave access point sending a connection advice message and a connection response message, upon receiving said interconnection instruction;
said second access point comprising;
a trigger switch (6) for initiating reception of an interconnection instruction;
at least a wireless port (1,2) for receiving said interconnection instruction and a connection advice message and sending a connection request message;
a memory (5) for storing a connection relationship information between said second and other access points;
an access point control unit (4) for controlling said second access point, based upon said information stored in said memory;
such that said second access point sending a connection request message and receiving a connection response message, upon receiving said interconnection instruction.

15. The system of claim 14 **characterized in that** said memory stores at least one selected from group of a hop number counted from said master access point to said first access point and a number of access points being downwardly connected with said first slave access point.

16. The system of claim 14 **characterized in that** said access point control unit (4) comprising an access point connection function (4-1) for controlling said connection request message to be sent to one access point only.

17. The system of claim 14 **characterized in that** said access point control unit (4) comprising a station registration processing function (4-2) for registering a station being capable to be connected with said access point.

18. The system of claim 14 **characterized in that** said access point control unit (4) comprising a handover processing function (4-3) for transferring data packets to other access point, based upon an instruction form said other access point.

19. The system of claim 14 **characterized in that** access point control unit (4) comprising packet transfer function (4-4) for transferring data packets addressed to other access point to said other access point or discarding said data packets.

20. A method for establishing a connection between an existing access point and a new access point to be installed of a wireless LAN system comprising a master access point being connected with a wired LAN cable and slave access points being directly wirelessly connected with said master access point or indirectly wirelessly connected with said master access point via others, comprising steps of,
at existing access point
(A) receiving an interconnection instruction;
(B) sending a connection advice message to a new access point;
(C) receiving a connection request message from said new access point;
(D) sending a connection response message to said new access point;
(E) setting said new access point as its connection destination;
(F) notifying other existing access point in the LAN system of registration of said new access point.

21. A method for establishing a connection between an existing access point and a new access point to be installed of a wireless LAN system comprising a master access point being connected with a wired LAN cable and slave access points being directly wirelessly connected with said master access point or indirectly wirelessly connected with said master access point via others, comprising steps of,
at new access point;
(A) receiving an interconnection instruction;
(B) receiving a connection advice message from an existing access point;
(C) sending a connection request message to said existing access point;
(D) receiving connection response message from said existing access point;
(E) setting said existing access point as its connection destination.
